(19) Europäisches Patentamt
European Patent Office
Office européen des brevets

(11) **EP 1 918 910 B1**

(12) **EUROPEAN PATENT SPECIFICATION**

(45) Date of publication and mention
of the grant of the patent:
**11.03.2009 Bulletin 2009/11**

(51) Int Cl.:
**G10L 19/06** (2006.01)   **G10L 19/02** (2006.01)
**G10L 19/08** (2006.01)   **G10L 21/02** (2006.01)

(21) Application number: **06022704.8**

(22) Date of filing: **31.10.2006**

(54) **Model-based enhancement of speech signals**

Modellbasierte Verbesserung von Sprachsignalen

Amélioration basée sur modèle de signaux de parole

(84) Designated Contracting States:
**AT BE BG CH CY CZ DE DK EE ES FI FR GB GR HU IE IS IT LI LT LU LV MC NL PL PT RO SE SI SK TR**

(43) Date of publication of application:
**07.05.2008 Bulletin 2008/19**

(73) Proprietor: **Harman Becker Automotive Systems GmbH**
**76307 Karlsbad (DE)**

(72) Inventors:
• **Große-Schulte, Dominik**
**65232 Traunusstein Hahn (DE)**
• **Krini, Mohamed**
**89073 Ulm (DE)**
• **Schmidt, Gerhard**
**89007 Ulm (DE)**

(74) Representative: **Grünecker, Kinkeldey, Stockmair & Schwanhäusser Anwaltssozietät**
**Leopoldstrasse 4**
**80802 München (DE)**

(56) References cited:
**WO-A-94/18666**          **US-A- 5 708 754**
**US-B1- 7 065 486**

• **ARSLAN L ET AL: "New methods for adaptive noise suppression" ACOUSTICS, SPEECH, AND SIGNAL PROCESSING, 1995. ICASSP-95., 1995 INTERNATIONAL CONFERENCE ON DETROIT, MI, USA 9-12 MAY 1995, NEW YORK, NY, USA, IEEE, US, vol. 1, 9 May 1995 (1995-05-09), pages 812-815, XP010625357 ISBN: 0-7803-2431-5**

## Description

### Field of Invention

The present invention relates to audio signal processing and, in particular, to the model-based enhancement of the quality of a speech signal by noise reduction and the generation of a reconstructed speech signal by making use of codebooks.

### Background of the Invention

One and two-way speech communication of two parties mutually transmitting and receiving audio signals, in particular, speech signals, often suffers from deterioration of the quality of the audio signals by background noise. Background noise in noisy environments can severely affect the quality and intelligibility of voice conversation and can, in the worst case, lead to a complete breakdown of the communication.

One prominent example for speech communication suffering from background noise in noisy environments is hands-free voice communication in vehicles. Some noise reduction must be employed in order to improve the intelligibility of transmitted speech signals. Present vehicle communication systems not only allow for hands-free telephony with remote subscribers at a far end outside the vehicle but also for inter-cabin communication. Microphones and loudspeakers provided for front-seat and back-seat passengers allow for a better acoustical understanding, in particular, if background noises increase during high-speed traveling on motorways.

Another example is given by speech recognition system and speech control systems in a noisy environment. The reliability of the recognition results heavily depend on the contribution of background noise to a detected speech signal and the efficiency of noise suppression means.

In the art, single channel noise reduction methods, e.g., employing spectral subtraction are well-known. These methods, however, are usually limited to (almost) stationary noise perturbations and positive signal-to-noise distances. The processed speech signals are distorted, since according to these methods, perturbations are not eliminated but rather spectral components that are affected by noise are damped. The intelligibility of speech signals is, thus, normally not improved sufficiently. Another method to improve the signal quality in distant talking speech acquisition is the utilization of multi-channel systems, i.e. microphone arrays. However, multi-channel solutions are not only expensive but also cannot guarantee sufficiently enhanced speech signals.

In the some more detail, the enhancement of noisy speech signals is usually performed by means of a time and/or frequency selective attenuation, e.g. by the employment of (modified) Wiener filters, in particular, by means of spectral subtraction. According to the method of spectral subtraction, disturbed parts of the spectrum are suppressed in accordance with a signal-to-noise (SNR) - dependent characteristic. The characteristic and the associated damping factors are usually used for signal processing in the sub-band or spectral domain. Parameters employed in the (Wiener) filter characteristic can, in principle, be stationary or might be time-dependent.

The sub-band signals are usually multiplied with damping factors to obtain estimates for the unperturbed sub-band signals that are combined by means of a synthesis filter bank in order to achieve an enhanced output signal. The damping factors are determined based on estimated power density spectra of the noise (perturbation) and the perturbed audio input signal that is to be enhanced. The power density spectrum of the actual input signal is usually calculated from the squared magnitude of the sub-band signal, i.e. the short-time spectrogram of the sub-band signal. Some damping limit can adaptively be selected.

In L. Arslan et al., "New Methods for Adaptive Noise Suppression", ICASSP, Detroit, USA, 1995, p. 812-815 a new noise suppression algorithm is proposed, wherein clean speech power spectra are estimated as an LPC-model sprectum derived from Wiener-filtered noisy speech.

The known methods for noise reduction in audio and particularly speech signals are, however, not satisfying for a relatively low signal-to-noise ratio. In the art, a signal-to-noise ratio of 10 dB and below results in a significant deterioration of the performance of noise reduction filtering means. In practice, at least some portions of a speech signal are often significantly embedded in background noise.

Thus, despite the recent progress in the art of signal processing, there is still a need for an improved processing of audio, in particular, speech signals, resulting in an enhanced noise reduction and intelligibility of processed speech signals.

### Description of the invention

The above mentioned problems are solved by a method for processing a speech input signal according to claim 1, the method comprising the steps of

estimating an input-signal-to-noise ratio or a signal-to-noise ratio of the speech input signal;

generating an excitation signal based on the speech input signal;

extracting a spectral envelope of the speech input signal;

generating a reconstructed speech signal on the basis of the excitation signal and the extracted spectral envelope;

filtering the speech input signal by a noise reduction filtering means to obtain a noise reduced signal; and

combining the reconstructed speech signal and the noise reduced signal on the basis of the speech input-signal-to-noise ratio or the signal-to-noise ratio to obtain an enhanced speech output signal.

The input-signal-to-noise ratio (INR) can, e.g., be calculated by the ratio of the short-time spectrogram (squared magnitude of the short-time spectrum) of the speech input signal (which can be a microphone signal generated by a microphone that detects a speech signal from a speaker) and the short-time power density spectrum of noise present in the speech input signal. Methods for the estimation of such spectra are well-known in the art (see, e.g., E. Hänsler, G. Schmidt, "Acoustic Echo and Noise Control", Wiley, Hoboken, NJ, USA, 2004).

Alternatively, in all of the herein described examples of the inventive method, the input-signal-to-noise ratio (INR) or the signal-to-noise ratio (SNR) can be used. The latter, e.g., can be calculated from the INR as $\text{SNR}(\Omega_\mu, n) = \max \{0, \text{INR}(\Omega_\mu, n) - 1\}$, where n denotes the discrete time index and $\Omega_\mu$ denotes discrete frequency nodes determined by an analysis filter bank or nodes of a discrete Fourier transform used to transform the speech input signal in the frequency domain. In this context, it is noted that the overall signal processing may be performed either in the time or the frequency domain. According to the embodiments described below the speech input signal is transformed into sub-band signals by means of an analysis filter bank, for example.

The excitation signal ideally represents the signal that would be detected immediately at the vocal chords of the speaker whose utterance is detected. Discrimination of voiced and unvoiced signal portions is involved in the step of estimating the excitation signal. The excitation signal may be modeled on the basis of the pitch and power of the noisy speech input signal (see description below for further details).

The (short-time) spectral envelope is a well-known quantity of particular relevance in speech recognition/synthesis representing the tone color. It may be preferred to employ the robust method of Linear Predictive Coding (LPC) in order to calculate a predictive error filter. The coefficients of the predictive error filter can be used for a parametric determination of the spectral envelope. Alternatively, one may employ models for spectral envelope representation that are based on line spectral frequencies or cepstral coefficients or mel-frequency cepstral coefficients (see also discussion below).

According to the present invention a reconstructed speech signal is generated by means of the (short-time) spectral envelope and the estimated excitation signal and this reconstructed speech signal is combined with a noise reduced version of the speech input signal (the employed noise reduction filtering means can be any one known in the art) in dependence on the estimated INR (or SNR, alternatively). In particular, signal portions that exhibit a rather low INR cannot be sufficiently enhanced by simple noise reduction as known in the art. For an SNR of about 10 dB and below, e.g., mere employment of a conventional noise filter may even further deteriorate the noisy speech input signal. For the signal portions with a low INR (SNR) the reconstructed speech signal is used in order to obtain an enhanced speech output signal exhibiting both reduced noise and enhanced intelligibility as compared to the art.

The combination of the reconstructed speech signal and the noise reduced signal may be performed in form of a weighted sum of these signals, i.e. each of theses signals is multiplied by different weight factors and then the weighted signals are added in order to achieve the enhanced speech output signal. The weights can easily be adapted according to the estimated INR or SNR. According to a specific embodiment, the noise reduced signal and the reconstructed speech signal are each transformed to sub-band signals and multiplied with weights that vary with the discrete frequency nodes determined by an analysis filter bank $\Omega_\mu$. In a frequency range with an INR below a predetermined threshold the weights are chosen such that the contribution of the reconstructed speech signal to the speech output signal dominates the contribution of the noise reduced signal.

Of particular importance for the herein disclosed method for obtaining a speech output signal of enhanced quality from a noisy speech input signal is the estimation of the INR or the SNR and, thus, the estimation of the short-time power density spectrum of the noise (in the following often simply referred to as noise power density spectrum), since the combination of the reconstructed speech signal and the noise reduced signal is controlled depending on the INR or the SNR and, therefore, depending on the estimated noise level.

Whereas the INR (SNR) can be estimated by estimating the short-time power density spectrum of noise included in the speech input signal and by determining the short-time spectrogram of the speech input signal, estimating the estimated noise power density spectrum for a discrete time index n may comprise the steps of

smoothing the short-time power density spectrum of the speech input signal (y(n)) in time to obtain a first smoothed short-time power density spectrum;

smoothing the first smoothed short-time power density spectrum in positive frequency direction to obtain a second smoothed short-time power density spectrum;

smoothing the second smoothed short-time power density spectrum in negative frequency direction to obtain a third smoothed short-time power density spectrum; and

determining the minimum of the third smoothed short-time power density spectrum for the discrete time index n and the estimated short-time power density spectrum of noise for a discrete time index n - 1.

The estimated short-time power density spectrum of noise for a discrete time index n - 1 is obtained similarly based on the estimated short-time power density spectrum of noise for a discrete time index n - 2, etc.

By such a particular way of estimating the noise power density spectrum suspension of outliers can be achieved. In order to prevent freezing of the process of estimating the noise power density spectrum it may be preferred to estimate the noise power density spectrum as the maximum of the above-mentioned minimum and a predetermined threshold value. The above-mentioned minimum may be multiplied by a factor of $1 + \varepsilon$, where E is a positive real number much less than 1. By an appropriate choice of the value for $\varepsilon$, a fast reaction of the estimation to temporal variations can be achieved (see also below).

In the above-described examples, the excitation signal may be generated by means of an excitation code book. Moreover, the reconstructed speech signal may be generated on the basis of an estimated spectral envelope that is generated from the extracted spectral envelope and by means of a spectral envelope code book. In this case, the spectral code book comprises prototype spectral envelopes trained beforehand which can be used, in particular, for the reconstruction of rather noisy portions of the speech input signal.

From the noisy speech input signal the (voice) pitch of a voiced signal portion can be estimated as known in the art and by means of the estimated pitch period and an excitation code book prepared beforehand the excitation signal can be generated. The excitation code book comprises entries representing weighted sums of sinus oscillations. According to an example the excitation code book can be represented by a matrix $C_g$ of such weighted sums of sinus oscillations wherein the entries in a row k + 1 include all of the oscillations of a row k and further include one single additional oscillation. Employment of an excitation code book allows for a reliable and satisfying generation of the voiced part of excitation signals (the unvoiced parts can be generated by noise generators).

The extracted spectral envelope that is directly obtained (and, e.g., subject to an Infinite Impulse Response smoothing) from the noisy speech input signal represents a reliable estimate for the spectral envelope of the unperturbed speech signal generated by a speaker only for signal portions with a relatively high INR or SNR, respectively. In order to achieve a reliable estimate for the spectral envelope of the unperturbed speech signal in low INR portions a spectral envelope code book is used. The spectral envelope code book is trained beforehand and includes, e.g., 256, trained prototype spectral envelopes. The extracted spectral envelope is compared with the entries of the code book for the signal portions with a relatively high INR. The best matching prototype spectral envelope of the code book is determined.

According to a specific example, the extracted spectral envelope of the speech input signal is used for the generation of the reconstructed speech signal for signal portions with high INR. For signal portions with low INR the corresponding best matching prototype spectral envelope of the spectral envelope code book is used. Preferably, the resulting spectral envelope used for the generation of the reconstructed speech signal is smoothed in positive and negative frequency direction in order to avoid an abrupt switching from the extracted spectral envelope to the entry of the spectral envelope that best matches the extracted envelope, which may cause perceptible artifacts.

According to one example of the inventive method employing the above-mentioned spectral envelope code book, a prototype spectral envelope of the spectral envelope code book is determined that best matches the extracted spectral envelope for portions of the speech input signal that exhibit an input-signal-to-noise ratio above a predetermined threshold and the estimated spectral envelope substantially consists, on the one hand, of the determined best matching prototype spectral envelope for the portions of the speech input signal that exhibit an input-signal-to-noise ratio above the predetermined threshold and, on the other hand, of the extracted spectral envelope for the other signal portions.

In this example the spectral envelope looked-up from the code book is only used for the portion(s) of the speech input signal for which it cannot be expected that the extracted spectral envelope resembles the spectral envelope of the unperturbed speech signal sufficiently to allow for a satisfying reconstructed speech signal in terms of authenticity and intelligibility.

A particularly efficient way to achieve the above-mentioned combination of the best matching spectral envelope of the code book and the spectral envelope extracted from the speech input signal makes use of a mask function $M(\Omega_\mu, n)$ in the sub-band regime as follows

$$M(\Omega_\mu,n)\ E_S(e^{j\Omega_\mu},n) + (1 - M(\Omega_\mu,n))\ E_{CB}(e^{j\Omega_\mu},n)$$

where $E_s(e^{j\Omega_\mu},n)$ and $E_{CB}(e^{j\Omega_\mu},n)$ denote the smoothed extracted spectral envelope and the best matching spectral envelope of the spectral envelope code book, respectively (for details of the smoothing see detailed description below). The mask function depends on the INR. For example, one might suitably choose $M(\Omega_\mu,n) = 1$, if the INR exceeds a predetermined threshold, and $M(\Omega_\mu,n) = \varepsilon$, where $\varepsilon$ is a small positive real number, if the INR lies below the predetermined threshold.

Furthermore, it may be preferred that the excitation signal is filtered such that only (mainly) for signal portions for which speech is actually present (detected) an excitation signal (a reconstructed speech signal) is generated. In order to achieve this and, thus, to obtain a further enhancement of the quality of the finally obtained speech output signal, the excitation signal may be generated from filtered excitation sub-band signals $A(e^{j\Omega_\mu},n)$ that may be generated by transforming the excitation signal obtained as described above into excitation sub-band signals $\tilde{A}(e^{j\Omega_\mu},n)$. The filtered excitation sub-band signals $A(e^{j\Omega_\mu},n)$ are obtained by means of a spread noise reduction filtering means $G_s(e^{j\Omega_\mu},n)$ applied to the unfiltered excitation sub-band signals $\tilde{A}(e^{j\Omega_\mu},n)$, i.e. $A(e^{j\Omega_\mu},n) = G_s(e^{j\Omega_\mu},n)\ \tilde{A}(e^{j\Omega_\mu},n)$.

A spread conventional noise reduction filter may be used to allow for signal reconstruction in a frequency range showing a low INR (SNR) with filter coefficients

$$G_s(e^{j\Omega_\mu},n) = \max\{G(e^{j\Omega_\mu},n), P_0(e^{j\Omega_\mu},n), P_1(e^{j\Omega_\mu},n),..,P_{M-1}(e^{j\Omega_\mu},n)\}$$

with $P_\nu(e^{j\Omega_\mu},n) = G(e^{j\Omega_\nu},n)P(e^{j\Omega_{\mu-\nu}},n)$ for $\mu \in \{0, ..,M-1\}$.

By $G(e^{j\Omega_\mu},n)$ conventionally determined damping factors are denoted and $P(e^{j\Omega_m},n)$ denotes a spreading function. For example, a modified Wiener characteristic can be used

$$G(e^{j\Omega_\mu},n) = \max\left\{G_{min}(e^{j\Omega_\mu},n), 1 - \beta(e^{j\Omega_\mu},n)\frac{\hat{S}_{nn}(\Omega_\mu,n)}{\left|Y(e^{j\Omega_\mu},n)\right|^2}\right\}.$$

The same filter characteristic can be used for the above-mentioned noise reduction filtering means. In the context of obtaining filtered excitation sub-band signals, however, a large overestimating factor $\beta(e^{j\Omega_\mu},n)$ and, in particular, a very high maximum damping, e.g., $G_{min}(e^{j\Omega_\mu},n)$ chosen from [0.01, 0.1], are chosen for the employed spread filter.

Experiments have shown that it is advantageous to adapt the phases of the sub-band signals of the reconstructed speech signal to the phases of the sub-band signals of the noise reduced signal for signal portions with a relatively high INR (SNR).

Thus, according to another example, the generation of the enhanced speech output signal ($\hat{s}(n)$) comprises the generation of sub-band signals ($\hat{S}_r(e^{j\Omega_\mu}, n)$) of the reconstructed speech signal ($\hat{s}_r(n)$) and sub-band signals ($\hat{S}_g(e^{j\Omega_\mu}, n)$) of the noise reduced signal ($\hat{s}_g(n)$) and the phases of the sub-band signals ($\hat{S}_r(e^{j\Omega_\mu}, n)$) of the reconstructed speech signal ($\hat{s}_r(n)$) are adapted to the phases of the sub-band signals ($\hat{S}_g(e^{j\Omega_\mu}, n)$) of the noise reduced signal ($\hat{s}_g(n)$) in dependence on the input-signal-to-noise ratio ($INR(\Omega_\mu,n)$), in particular, by

$$\hat{S}_{r,mod}(e^{j\Omega_\mu},n) = \begin{cases} \dfrac{\left|\hat{S}_r(e^{j\Omega_\mu},n)\right|}{\left|\hat{S}_g(e^{j\Omega_\mu},n)\right|}\hat{S}_g(e^{j\Omega_\mu},n), & \text{if } INR(\Omega_\mu,n) > \text{some threshold} \\[2em] \hat{S}_r(e^{j\Omega_\mu},n), & \text{else}. \end{cases}$$

It is noted that the above-mentioned sub-band signals $\hat{S}_g(e^{j\Omega_\mu}, n)$ and $\hat{S}_r(e^{j\Omega_\mu}, n)$ are either generated by analysis filter banks from the noise reduced full band signal output by the noise reduction filtering means and the reconstructed full band speech signal or they are directly output by the noise reduction filtering means and by the process of reconstructing the speech signal.

The present invention also provides a computer program product, comprising one or more computer readable media having computer-executable instructions for performing the steps of the method according to one of the above described examples.

The above-mentioned problems of the art are also solved by a signal processing means for processing a speech input signal according to claim 12, comprising

a noise reduction filtering means configured to receive the speech input signal and to output a noise reduced signal;

a signal reconstruction means configured to receive the speech input signal and to extract the spectral envelope from the speech input signal and to generate an excitation signal on the basis of the speech input signal and to generate and output a reconstructed speech signal based on the extracted spectral envelope and the excitation signal;

a signal combination means configured to receive the noise reduced signal and the reconstructed speech signal and to output an enhanced speech output signal as a combination of the noise reduced signal and the reconstructed speech signal; and

a control means configured to receive the speech input signal and to control the signal reconstruction means and the signal combination means based on the input-signal-to-noise ratio or the signal-to-noise ratio of the speech input signal determined by the noise reduction filtering means or the control means.

The signal processing means may further comprise at least one analysis filter bank configured to transform the speech input signal in speech input sub-band signals and at least one synthesis filter bank configured to synthesize sub-band signals output by the signal combination means or by the noise reduction filtering means and the signal reconstruction means.

The signal combination means may generate the speech output signal by building a weighted sum of the noise reduced signal and the reconstructed speech signal. The input-signal-to-noise ratio or the signal-to-noise ratio may be estimated by the control means of the noise reduction filtering means by estimating the short-time power density spectrum of noise included in the speech input signal and determining the short-time spectrogram of the speech input signal.

According to an embodiment the signal processing means comprises

an excitation code book database;

a spectral envelope code book database;

an excitation estimator configured to generate the excitation signal by means of the excitation code book database;

a spectral envelope estimator configured to generate an estimated spectral envelope by means of the spectral envelope code book database; and

the signal reconstruction means is configured to generate and output the reconstructed speech signal based on the estimated spectral envelope and the excitation signal.

The excitation estimator and the spectral envelope estimator can be configured to generate the excitation signal and the estimated spectral envelope, respectively, as discussed above in the context of the inventive method.

The control means of the above mentioned examples of the signal processing means can be configured to determine the input-signal-to-noise ratio or the signal-to-noise ratio of the speech input signal and to de-activate the signal reconstruction means, if it is determined that the input-signal-to-noise ratio or the signal-to-noise ratio of the speech input signal exceeds a predetermined threshold for the entire speech input signal. Thus, the relatively expensive reconstruction of the speech signal can be saved, if the perturbation of the input speech signal is not so severe that one has to expect that the noise reduction filtering means might fail in sufficiently enhancing the quality of the speech input signal.

The present invention also provides a hands-free telephony system, comprising the signal processing means according to one of the above-described examples. It is also provided herein speech recognition means comprising the signal processing means according to one of the above-described examples.

Moreover, it is provided a speech dialog system or voice control system comprising the above-mentioned speech recognition means or the signal processing means according to one of the above-described examples.

Since the quality and, thereby, in particular, the intelligibility of the achieved speech signal that was subject to the inventive signal processing can be enhanced significantly, the above mentioned systems represent examples of preferred applications. Telephone conversation and speech recognition can particularly benefit from the herein disclosed processing of speech signals, since the signal portions of the speech input signal that are heavily perturbed can be replaced by a reconstructed speech signal.

Additional features and advantages of the invention will be described with reference to the drawings:

Figure 1 is a flow chart illustrating the principle of an example of the herein disclosed method comprising combining a noise reduced speech signal and a reconstructed speech signal.

Figure 2 is block diagram illustrating basic components of an example of the herein disclosed signal processing means comprising a signal reconstruction means and a signal combination means.

Figure 3 shows an example of the signal reconstruction means of Figure 2 comprising a spectral envelope code book and an excitation code book used for the generation of a reconstructed speech signal.

Figure 4 shows an example of a spreading function used for the generation of an excitation signal.

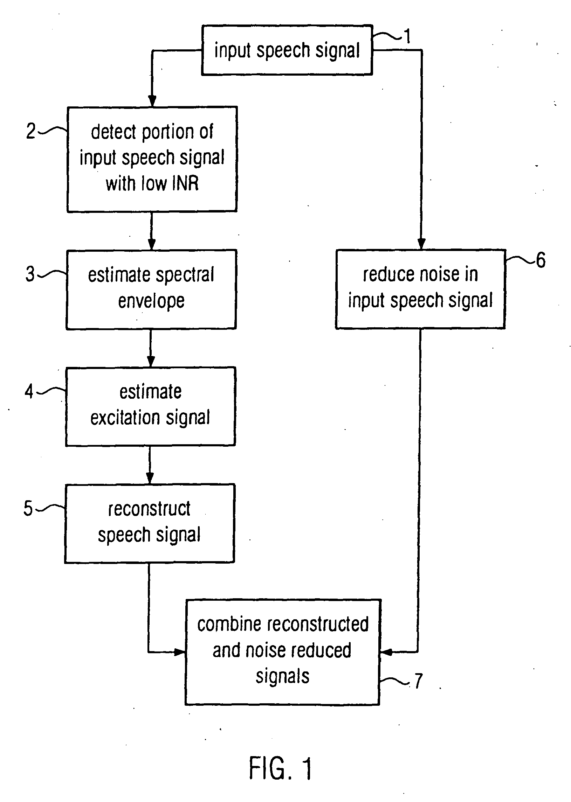

Basic steps of an example of the inventive method are illustrated in Figure 1. A noisy speech signal is input 1, e.g., by means of one or more microphones, in a signal processing means. A portion of the speech input signal is detected 2 that shows a signal-to-noise ratio (SNR) below a predetermined threshold. This portion of the signal is heavily perturbed by background noise and, thus, conventional noise reduction would fail.

According to the present example, the spectral envelope is extracted from the speech input signal and the corresponding spectral envelope of the unperturbed speech signal is estimated 3 (details are given below) from the signal portions that are not heavily perturbed by noise. Further, an excitation signal is estimated 4. The process of estimating the excitation signal comprises an excitation classification of the speech input signal in voiced and unvoiced parts. Based on the estimated spectral envelope and the estimated excitation signal the speech input signal is reconstructed 5 as it is known in the art.

On the other hand, the speech input signal is simply noise reduced 5 by some known noise reduction filtering means. Alternatively, only the portion of the input signal that is not heavily affected by background noise is filtered by the noise reduction filtering means. Finally, the noise reduced signal (portion) and the reconstructed speech signal are combined 7 to obtain a speech output signal with an enhanced quality. Combination of the noise reduced signal and the reconstructed speech signal can be carried out in form of a weighted summation with the weights being dependent on the actual SNR.

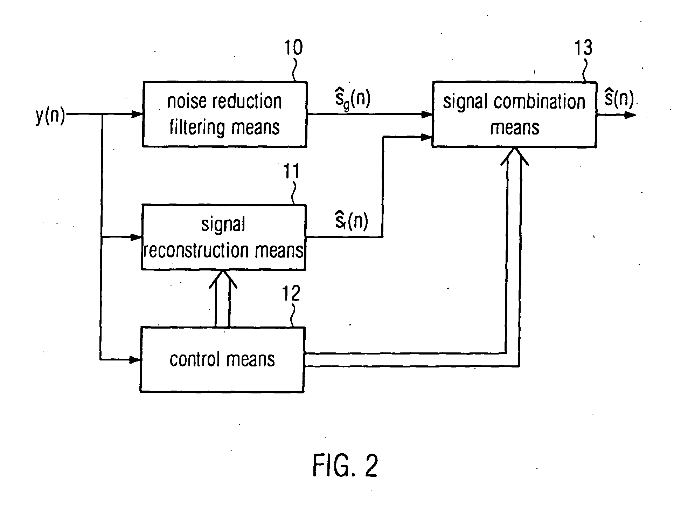

Figure 2 shows basic components of an example of the inventive signal processing means. The signal processing means comprises a conventional noise reduction filtering means 10. A speech input signal $y(n)$ is filtered by this means and a noise reduced signal $\hat{s}_g(n)$ is output. By the argument n the discrete time index is denoted.

The speech input signal $y(n)$ is also received by a signal reconstruction means 11 and a control means 12. The signal reconstruction means 11 is configured to reconstruct a speech signal on the basis of a feature analysis of the speech input signal $y(n)$. In particular, it is configured to estimate a spectral envelope of the unperturbed speech signal on the basis of the extracted spectral envelope of the speech input signal $y(n)$ and making use of a spectral envelope code book comprising prototype spectral envelopes trained beforehand. The signal reconstruction means 11 is also configured to estimate an unperturbed excitation signal by means of an excitation code book (for details see description below).

The control means 12 according to the present example is configured to estimate the short-time power density spectrum of the noise and to detect the short-time spectrogram of the speech input signal $y(n)$. For this, the input signal $y(n)$ has to be subject of a short-time Fourier transform or filtering by an analysis filter bank. The SNR or the input-signal-to-noise ratio (INR) of the speech input signal $y(n)$ is also estimated by the control means 12. The control means 12 is also configured to perform a voiced-unvoiced classification of the speech input signal $y(n)$. The operation of the signal reconstruction means 11 is controlled by the results obtained by the control means 12.

Moreover, the control means 12 controls a signal combination means 13 receiving the reconstructed speech signal $\hat{s}_r(n)$ output by the signal reconstruction means 11 as well as the noise reduced signal $\hat{s}_g(n)$ output by the noise reduction filtering means 10. The control means 12 controls the signal combination means 13 to mix the reconstructed speech signal $\hat{s}_r(n)$ and the noise reduced signal $\hat{s}_g(n)$ or portions of these signals according to the noise level in different signal portions. Signal portions that are heavily perturbed by noise are replaced by the corresponding portions of the reconstructed speech signal. The signal $\hat{s}(n)$ output by the signal combination means 13 represents an enhanced speech signal.

According to an example the configuration shown in Figure 2 includes an analysis filter bank that analyzes the speech input signal y(n) into sub-band signals or short-time spectra $Y(e^{j\Omega_\mu}, n)$ with the frequency nodes $\Omega_\mu$ ($\mu$ = 0, 1, .., M-1) as it is known in the art. In this case the components 10, 11 and 12 of Figure 2 receive the sub-band signals Y $(e^{j\Omega_\mu}, n)$ and operate in the frequency domain. In this case, the output signal $\hat{s}(n)$ is eventually obtained by means of a synthesis filter bank. It is noted that, in principle, the overall signal processing can be performed either in the time or the frequency domain.

In the following, the components of the signal processing means shown in Figure 2 are described by way of example in more detail.

An accurate estimation of the noise that is present in the speech input signal y(n) is crucial for the successful operation of the present invention. This estimate can be performed by the noise reduction filtering means 10 and/or the control means 12. According to an embodiment, it is assumed that speech pauses are present in the perturbed speech input signal y(n) during which the noise can be directly measured. Thus, the short-time spectrogram of y(n), i.e. $|Y(e^{j\Omega_\mu}, n)|^2$ can, in principle, be determined in speech pauses and used for the estimate for the short-time power density spectrum of the background noise in a straightforward way.

However, according to a preferred example the process of estimating the short-time power density spectrum of the noise that is present in the speech input signal comprises smoothing of the short-time power density spectrum of the speech input signal in time and in frequency as well as a minimum search. Smoothing in time of the short-time power density spectrum of the speech input signal can be performed as an Infinite Impulse Response (IIR) smoothing according to

$$\overline{S}_{yy}(\Omega_\mu, n) = \lambda_T \overline{S}_{yy}(\Omega_\mu, n-1) + (1-\lambda_T) \; \left|Y(e^{j\Omega_\mu}, n)\right|^2$$

with $0 \leq \lambda_T < 1$. The smaller $\lambda_T$ is chosen the faster the reaction of the estimation is.

An IIR smoothing in frequency can, e.g., be performed as

$$\overline{S}'_{yy}(\Omega_\mu, n) = \begin{cases} \overline{S}_{yy}(\Omega_\mu, n), & \text{if } \mu = 0 \\ \lambda_F \, \overline{S}'_{yy}(\Omega_{\mu-1}, n) + (1-\lambda_F)\overline{S}_{yy}(\Omega_\mu, n), & \text{if } \mu \in \{1, .., M-1\} \end{cases}$$

followed by

$$\overline{S}''_{yy}(\Omega_\mu, n) = \begin{cases} \overline{S}'_{yy}(\Omega_\mu, n), & \text{if } \mu = M-1 \\ \lambda_F \, \overline{S}''_{yy}(\Omega_{\mu+1}, n) + (1-\lambda_F)\overline{S}'_{yy}(\Omega_\mu, n), & \text{if } \mu \in \{0, .., M-2\} \end{cases}$$

with $0 \leq \lambda_F < 1$. This smoothing in frequency avoids the occurrence of outliers that could result in perceptible artifacts in the processed signal. The estimated short-time power density spectrum of the noise that is used for the subsequent signal processing can be calculated as follows

$$\hat{S}_{nn}(\Omega_\mu, n) = \max \left\{ S_{nn,min}, \min\left\{ \hat{S}_{nn}(\Omega_\mu, n-1), \overline{S}''_{yy}(\Omega_\mu, n) \right\}(1+\varepsilon) \right\}$$

with $0 < \varepsilon \ll 1$ and the limiting threshold $S_{nn,min}$ that guarantees that the estimated short-time power density spectrum is never zero. By the parameter $\varepsilon$ the reaction speech of the estimation can be selected. It is to be chosen greater than zero in order to guarantee that reaction to a temporal increase of the noise power density is possible.

Based on the short-time power density spectrum of the noise $\hat{S}_{nn}(\Omega_\mu, n)$ the control unit 12 can estimate the input-signal-to-noise ratio (INR) by $INR(\Omega_\mu, n) = |Y(e^{j\Omega_\mu}, n)|^2 / \hat{S}_{nn}(\Omega_\mu, n)$. The INR is used for several steps of the subsequent signal processing. In particular, the combination of the reconstructed speech signal $\hat{s}_r(n)$ and the noise reduced signal $\hat{s}_g(n)$ depends on the actual INR. Alternatively, the signal-to-noise ratio (SNR) that is given by SNR($\Omega_\mu$,

n) = max {0, INR($\Omega_\mu$,n) - 1} can be used rather than the INR.

The control means 12 also performs voiced/unvoiced classification of the speech input signal y(n). According to one example, a sound portion present in the speech input signal y(n) is classified as voiced (unvoiced), if a classification parameter $t_c(n)(0 \le t_c(n) \le 1)$ is large (small). The classification parameter $t_c(n)$ results from a non-linear mapping of the quantity $r_{INR}(n)$ that is given by $r_{INR}(n) = INR_{high}(n) / (INR_{low}(n) + \Delta_{INR})$ where the constant $\Delta_{INR}$ prevents division by zero and

$$INR_{high}(n) = \frac{1}{\mu_3 - \mu_2 + 1} \sum_{\mu=\mu_2}^{\mu_3} INR(\Omega_\mu, n)$$

$$INR_{low}(n) = \frac{1}{\mu_1 - \mu_0 + 1} \sum_{\mu=\mu_0}^{\mu_1} INR(\Omega_\mu, n)$$

where the normalized frequencies $\Omega_{\mu 0}$, $\Omega_{\mu 1}$, $\Omega_{\mu 2}$ and $\Omega_{\mu 3}$ are chosen to correspond to the real frequencies 300 Hz, 1050 Hz, 3800 Hz and 5200 Hz, respectively, as it is appropriate in the context of speech signal processing. In the simplest case a binary classification can be obtained by $t_c(n) = f(r_{INR}(n)) = 1$, if $r_{INR}(n)$ is below a suitable threshold, and zero else.

Note that the explained example makes use of the fact that unvoiced portions of the speech input signal y(n) show the dominant power density in the high frequency range whereas voiced portions show the dominant power density in the low frequency range.

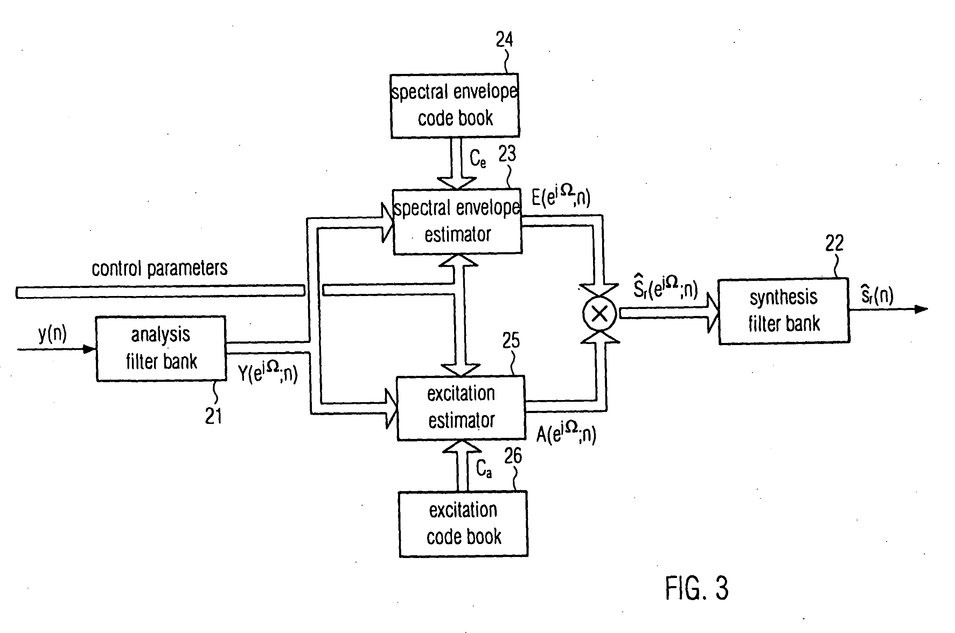

Figure 3 shows in some detail the signal reconstruction means 11 of Figure 2 according to an advantageous example. An analysis filter bank 21 is used to obtain sub-band signals $Y(e^{j\Omega_\mu}, n)$ from the speech input signal y(n). Based on the sub-band signals $Y(e^{j\Omega_\mu}, n)$ the excitation signal spectrum $A(e^{j\Omega_\mu}, n)$ and the spectral envelope $E(e^{j\Omega_\mu}, n)$ of the unperturbed speech signal (the speech signal without any noise contribution) are estimated by the signal reconstruction means 11 to obtain a spectrum of the reconstructed speech signal $\hat{S}_r(e^{j\Omega_\mu}, n) = A(e^{j\Omega_\mu}, n) E(e^{j\Omega_\mu}, n)$. The reconstructed speech signal $\hat{s}_r(n)$ of the total band can be obtained from the spectrum $\hat{S}_r(e^{j\Omega_\mu}, n)$ by means of a synthesis filter bank 22.

It is noted that, alternatively, the spectrum $\hat{S}_r(e^{j\Omega_\mu}, n)$ might be output and combined with a corresponding spectrum output by the noise reduction filtering means $\hat{S}_g(e^{j\Omega_\mu}, n)$. In other word, depending on the specific embodiment the signal combination means 13 of Figure 2 may be configured to combine sub-band signals received from the noise reduction filtering means 10 and the signal reconstruction means 11 and subsequently synthesize the combined sub-band signals or to receive total band signals from these means 10 and 11.

The estimation of the spectral envelope of the unperturbed speech signal is achieved as follows. First, the spectral envelope $E_s(e^{j\Omega_\mu}, n)$ of the speech input signal y(n) is extracted by a spectral envelope estimator 23 employing a method as known in the art. Linear Prediction Coding (LPC) or a spectral analysis may be used to extract the spectral envelope. According to one example the spectral envelope is directly estimated by a double IIR smoothing method according to

$$E_S(e^{j\Omega_\mu}, n) = \begin{cases} \tilde{E}_s(e^{j\Omega_\mu},n), & \text{if } \mu = M-1 \\ \lambda_E E_S(e^{j\Omega_{\mu+1}},n) + (1-\lambda_E) \tilde{E}_s(e^{j\Omega_\mu},n), & \text{if } \mu \in \{0,..,M-2\} \end{cases}$$

with

$$\tilde{E}_S(e^{j\Omega_\mu},n) = \begin{cases} | Y(e^{j\Omega_\mu},n) |, & \text{if } \mu = 0 \\ \lambda_E \tilde{E}_S(e^{j\Omega_{\mu-1}},n) + (1-\lambda_E)| Y(e^{j\Omega_\mu},n) |, & \text{if } \mu \in \{1,..,M-1\} \end{cases}$$

with a smoothing constant chosen from $0 \le \lambda_E < 1$. A suitable choice, e.g., is $\lambda_E = 0.5$.

The thus extracted spectral envelope is a satisfying approximation for the spectral envelope of the unperturbed speech signal only for signal portions that are not significantly affected by noise. In order to achieve a reliable spectral envelope even for signal portions with a low INR (SNR), a spectral envelope codebook 24 is employed that has been trained beforehand. The spectral envelope codebook 24 includes logarithmic representations of prototype spectral envelopes of particular sounds $E_{CB,log}(e^{j\Omega_\mu},0)$ to $E_{CB,log}(e^{j\Omega_\mu}, N_{CB,e}-1)$. A suitable code book may have a size of $N_{CB,e}$ = 256.

The spectral envelope codebook 24 is searched for the entry that best matches the extracted spectral envelope $E_S(e^{j\Omega_\mu}, n)$ for signal portions with a high INR. For this a normalized logarithmic version of the extracted spectral envelope is calculated $\tilde{E}_{S,log}(e^{j\Omega_\mu}, n) = 20 \log_{10} E_S(e^{j\Omega_\mu}, n) - E_{S,log,norm}(n)$ with

$$E_{S,log,norm}(n) = \frac{\sum_{\mu=0}^{M-1} M(\Omega_\mu,n)\, 20 \log_{10} E_S(e^{j\Omega_\mu},n)}{\sum_{\mu=0}^{M-1} M(\Omega_\mu,n)}$$

where the mask function $M(\Omega_\mu,n)$ depends on the INR, e.g., by $M(\Omega_\mu,n) = g(INR(\Omega_\mu,n))$, where the mapping function g maps the values of the INR to the interval [0, 1]. Resulting values close to one indicate a low noise level, i.e. a good SNR or INR, respectively. In the simplest case one might choose a binary function g that maps to 1, if the INR exceeds a predetermined threshold, e.g., 2 or 4, and to some small but finite real value (to avoid division by zero in the above equation), if the INR falls below that threshold.

The spectral envelopes of the spectral code book 24 are normalized accordingly and search for the best matching entry of the code book is performed on the basis of a logarithmic INR weighted magnitude distance

$$m_{opt}(n) = \arg\min_m \sum_{\mu=0}^{M-1} M(\Omega_\mu,n)\, \left| \tilde{E}_{S,log}(e^{j\Omega_\mu},n) - \tilde{E}_{CB,log}(e^{j\Omega_\mu},n,m) \right|$$

$$\text{with } \tilde{E}_{CB,log}(e^{j\Omega_\mu},n,m) = E_{CB,log}(e^{j\Omega_\mu},m) - E_{CB,log,norm}(n,m) \;\; (m = 0, .., N_{cb,e})$$

and

$$E_{CB,log,norm}(n,m) = \frac{\sum_{\mu=0}^{M-1} M(\Omega_\mu,n)\, E_{CB,log}(e^{j\Omega_\mu},m)}{\sum_{\mu=0}^{M-1} M(\Omega_\mu,n)}\,.$$

By argmin the argument of the minimum function is denoted that returns the value of m for which

$$\sum_{\mu=0}^{M-1} M(\Omega_\mu,n)\left| \tilde{E}_{S,log}(e^{j\Omega_\mu},n) - \tilde{E}_{CB,log}(e^{j\Omega_\mu},n,m) \right|$$ assumes a minimum. The thus obtained spectral envelope of the spectral envelope code book 24 is linearized and re-normalized

$$E_{CB}(e^{j\Omega_\mu},n) = 10^{(\tilde{E}_{CB,log}(e^{j\Omega_\mu},n,m_{opt}(n))+E_{S,log,norm}(n))/20}\,.$$

For the reconstruction of the speech signal the obtained spectral envelope $E_{CB}(e^{j\Omega_\mu},n)$ can be used for the portion of the speech input signal with a low INR (SNR) and the extracted spectral envelope $E_S(e^{j\Omega_\mu}, n)$ for portions with a high INR (SNR). According to a specific example, the following spectral envelope is output by the spectral envelope estimator 23

$$E(e^{j\Omega_\mu}, n) = \begin{cases} \widetilde{E}(e^{j\Omega_\mu}, n), & \text{if } \mu = M-1 \\ \lambda_{mix} E(e^{j\Omega_{\mu+1}}, n) + (1-\lambda_{mix})\widetilde{E}(e^{j\Omega_\mu}, n), & \text{if } \mu \in \{0, .., M-2\} \end{cases}$$

with

$$\widetilde{E}(e^{j\Omega_\mu}, n) = \begin{cases} \breve{E}(e^{j\Omega_\mu}, n), & \text{if } \mu = 0 \\ \lambda_{mix}\widetilde{E}(e^{j\Omega_{\mu-1}}, n) + (1-\lambda_{mix})\breve{E}(e^{j\Omega_\mu}, n), & \text{if } \mu \in \{1, .., M-1\} \end{cases}$$

and

$\breve{E}(e^{j\mu\Omega}, n) = M(\Omega_\mu, n) E_s(e^{j\Omega_\mu}, n) + (1 - M(\Omega_\mu, n)) E_{CB}(e^{j\Omega_\mu}, n)$. The smoothing constant is chosen between 0 and 1 and may, e.g., be chosen as $\lambda_{mix} = 0.3$.

The signal reconstruction means 11 also comprises an excitation estimator 25 making use of an excitation code book 26 for estimating an excitation signal that can be shaped with the spectral envelope $E(e^{j\Omega_\mu}, n)$ output by the spectral envelope estimator 23 in order to obtain a reconstructed speech signal.

In order to estimate an excitation signal a(n), first, voiced and unvoiced signal portions are determined as mentioned above. Unvoiced portions $\tilde{a}_u(n)$ of an excitation signal $\tilde{a}(n)$ are generated by a noise generator. In order to achieve a voiced portion $\tilde{a}_v(n)$ of an excitation signal $\tilde{a}(n)$ the (voice) pitch has to be determined. This can be done by any method known in the art (see, e.g., W. Hess, "Pitch Determination of Speech Signals", Springer Berlin, 1983). Based on the determined pitch a voiced portion $\tilde{a}_v(n)$ of an excitation signal $\tilde{a}(n)$ is generated by means of the excitation code book 26 including entries that represent weighted sums of sinus oscillations, e.g.,

$$c_{s,k}(l) = \sum_{m=0}^{k} 0.99^m \sin\left(\frac{2\pi l(m+1)}{L}\right)$$

where L denotes the length of each code book entry. The entries $C_{s,k}(l)$ are coefficients of a matrix $\mathbf{C_a}$ read out for the generation of the voiced portion $\tilde{a}_v(n)$ of an excitation signal $\tilde{a}(n)$ as $\tilde{a}_v(n) = C_{s,l_z(n)}(l_s(n))$ where $l_z(n)$ denotes the index of the row and $l_s(n)$ the index of the column of the matrix $\mathbf{C_a}$ formed by the coefficients $C_{s,k}(l)$.

According to the present example, the index of the row is calculated as

$$l_z(n) = \text{round}\left(\frac{T_0(\text{round}(n/r))}{2} - 1\right)$$

where $T_0$ is the period of the pitch (that, in general, depends on time) and r/n represents the down-sampled calculation of the period of the pitch (the pitch is calculated every r sampling instants of the speech input signal). The round operation returns the next smaller or larger integer of the argument.

The index of the column is calculated by $l_s(n) = \text{round}(\tilde{l}_s(n))$, with

$$\tilde{l}_s(n) = \begin{cases} \tilde{l}_s(n-1) + \Delta_s(n), & \text{if } \tilde{l}_s(n-1) + \Delta_s(n) < L - 1.5 \\ \tilde{l}_s(n-1) + \Delta_s(n) - L, & \text{else} \end{cases}$$

with the increment $\Delta_s(n) = L / (T_0 \,(\text{round}(n/r)))$. The subtraction by 1.5 in the above equation is provided such that the index of the column satisfies the relation $0 \leq l_s(n) \leq L\text{-}1$.

The excitation signal $\tilde{a}(n)$ is calculated by a weighted summation of the voiced portion $\tilde{a}_v(n)$ and the unvoiced one $\tilde{a}_u(n)$. According to one example, the excitation signal $\tilde{a}(n)$ is calculated by

$$\tilde{a}\,(n) = t_c(\text{round}(n/r))\,\tilde{a}_v(n) + [1 - t_c\,(\text{round}(n/r))]\,\tilde{a}_u(n).$$

This signal is input in an analysis filter bank to generate sub-band signals $\tilde{A}(e^{j\Omega_\mu},n)$ that are subsequently weighted by a noise reduction filter with filter coefficients $G_s(e^{j\Omega_\mu},n)$ in order to generate an excitation signal only for signal portions in which speech was detected. A spread conventional filter is used for the noise reduction filter to allow for signal reconstruction in frequency ranges showing a low INR (SNR).

According to one example the filter coefficients are determined for $\mu \in \{0,..,M\text{-}1\}$ by

$$G_s(e^{j\Omega_\mu},n) = \max\{G(e^{j\Omega_\mu},n), P_0(e^{j\Omega_\mu},n), P_1(e^{j\Omega_\mu},n), .., P_{M\text{-}1}(e^{j\Omega_\mu},n)\}$$

with $P_v(e^{j\Omega_\mu},n) = G(e^{j\Omega_v}, n)\, P(e^{j\Omega_{\mu\text{-}v}},n)$.

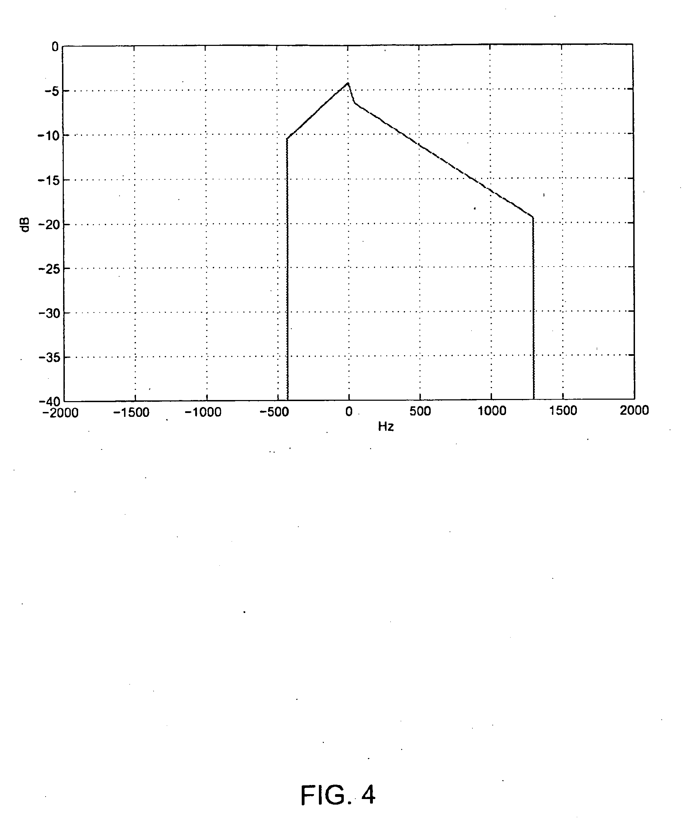

By $G(e^{j\Omega_\mu},n)$ conventionally determined damping factors (filter coefficients) are denoted and $P(e^{j\Omega_m},n)$ denotes a spreading function. An example of the frequency response of a suitable real-valued positive spreading function is shown in Figure 4. The damping factors, for example, may be determined according to a modified Wiener characteristic including the short-time power density spectrum of the noise and the spectrogram of the speech input signal $y(n)$ can be used

$$G(e^{j\Omega_\mu},n) = \max\left\{G_{min}(e^{j\Omega_\mu},n), 1 - \beta(e^{j\Omega_\mu},n)\frac{\hat{S}_{nn}(\Omega_\mu,n)}{\left|Y(e^{j\Omega_\mu},n)\right|^2}\right\}.$$

The same characteristic can be used in the noise reduction filtering means 10 of Figure 2. In the present context, however, a large overestimating factor $\beta(e^{j\Omega_\mu},n)$ and, in particular, a very high maximum damping, e.g., $G_{min}(e^{j\Omega_\mu},n) = 0.01$ or $0.1$, are chosen for the spread filter. The excitation estimator 25 according to the present example outputs the estimated excitation spectrum $A(e^{j\Omega_\mu},n) = G_s(e^{j\Omega_v},n)\,\tilde{A}(e^{j\Omega_{\mu\text{-}v}},n)$. The synthesis filter bank 22 converts the spectrum of the reconstructed speech signal $\hat{S}(e^{j\Omega_\mu},n) = A(e^{j\Omega_v},n)\,E(e^{j\Omega_{\mu\text{-}v}},n)$ into the total band reconstructed speech signal $\hat{s}_r(n)$ that is output by the signal reconstruction means 11 (see also Figure 2).

The signal combination means 13 of Figure 2 is configured to combine the reconstructed speech signal $\hat{s}_r(n)$ and the noise reduced signal $\hat{s}_g(n)$ received from the conventional noise reduction filtering means 10. The combination is performed, e.g., in the sub-band regime. Thus, in the present example, the reconstructed speech signal $\hat{s}_r(n)$ and the noise reduced signal $\hat{s}_g(n)$ have to be analyzed into sub-band signals $\hat{S}_r(e^{j\Omega_\mu},n)$ and $\hat{S}_g(e^{j\Omega_\mu},n)$, respectively, by means of analyzing filter banks. Alternative, the noise reduction filtering means 10 could output sub-band signals $\hat{S}_g(e^{j\Omega_\mu},n)$ and the signal reconstruction means 11 could output sub-band signals $\hat{S}_r(e^{j\Omega_\mu}, n)$ that then could be directly used by the signal combination means 13.

Before combining the sub-band signals $\hat{S}_r(e^{j\Omega_\mu},n)$ and $\hat{S}_g(e^{j\Omega_\mu},n)$, it is preferred to adapt the phases of the reconstructed speech signal to the noisy speech input signal (or the output signal of the conventional noise reduction filtering means 10, which usually only influences the amplitude and not the phase of the signal that is to be enhanced). According to an example this can be achieved by

$$\hat{S}_{r,mod}(e^{j\Omega_\mu},n) = \begin{cases} \left|\dfrac{\hat{S}_r(e^{j\Omega_\mu},n)}{\hat{S}_g(e^{j\Omega_\mu},n)}\right| \hat{S}_g(e^{j\Omega_\mu},n), & \text{if } INR(\Omega_\mu,n) > \text{some threshold} \\[3em] \hat{S}_r(e^{j\Omega_\mu},n), & \text{else}. \end{cases}$$

The modified sub-band signal $\hat{S}_{r,mod}(e^{j\Omega_\mu},n)$ and the noise reduced sub-band signal $\hat{S}_g(e^{j\Omega_\mu},n)$ are subject to a weighted summation resulting in signals

$$\hat{S}(e^{j\Omega_\mu},n) = H_g(e^{j\Omega_\mu},n)\,\hat{S}_g(e^{j\Omega_\mu},n) + H_r(e^{j\Omega_\mu},n)\,\hat{S}_{r,mod}(e^{j\Omega_\mu},n),$$

which are transformed by a synthesis filter bank comprised in the signal combination means 13 in order to obtain the enhanced speech output signal $\hat{s}(n)$. The weights $H_g(e^{j\Omega_\mu},n)$ and $H_r(e^{j\Omega_\mu},n)$ depend on the INR and are determined by the control means 12. According to a preferred example, the weights can be determined by mean values of the INR obtained by the help of $\rho$ Mel filters, $\rho \in \{0, 1, .., M_{mel} - 1\}$, with frequency responses $F_\rho(e^{j\Omega_\mu})$. For a sampling rate of 11025 Hz, e.g., $M_{mel} = 16$ can suitably be chosen. The averaged INR can be calculated by

$$INR_{av}(\rho, n) = \frac{\displaystyle\sum_{\mu=0}^{M-1} F_\rho(e^{j\Omega_\mu})\, INR(\Omega_\mu,n)}{\displaystyle\sum_{\mu=0}^{M-1} F_\rho(e^{j\Omega_\mu})}.$$

According to a specific embodiment, the weights $H_g(e^{j\Omega_\mu},n)$ and $H_r(e^{j\Omega_\mu},n)$ can be determined from $INR_{av}(\rho, n)$ by means of a binary characteristic $f_{mix}(INR_{av}(\rho, n)) = 1$, if $INR_{av}(\rho, n) > $ some threshold, e.g., chosen from the interval [4, 10], and $f_{mix}(INR_{av}(\rho, n)) = 0$, else. It is noted that other non-binary characteristics can also be applied. By means of the above-mentioned or any other chosen characteristic $f_{mix}(INR_{av}(\rho, n))$ the weights for the combination of the modified sub-band signal $\hat{S}_{r,mod}(e^{j\Omega_\mu},n)$ and the noise reduced sub-band signal $\hat{S}_g(e^{j\Omega_\mu},n)$ are calculated by

$$H_g(e^{j\Omega_\mu},n) = \sum_{\rho=0}^{M_{mel}} f_{mix}(INR_{av}(\rho, n))\, F_\rho(e^{j\Omega_\mu})$$

and

$$H_r(e^{j\Omega_\mu},n) = 1 - H_g(e^{j\Omega_\mu},n).$$

All previously discussed embodiments are not intended as limitations but serve as examples illustrating features and advantages of the invention.

**Claims**

1. Method for processing a speech input signal y(n), comprising
   estimating an input-signal-to-noise ratio (INR) or a signal-to-noise ratio (SNR) of the speech input signal y(n);
   generating an excitation signal based on the speech input signal y(n);
   extracting a spectral envelope of the speech input signal y(n);

generating a reconstructed speech signal $\hat{s}_r(n)$ on the basis of the excitation signal and the extracted spectral envelope;

filtering the speech input signal y(n) by a noise reduction filtering means (10) to obtain a noise reduced signal $\hat{s}_g(n)$; and

combining the reconstructed speech signal $\hat{s}_r(n)$ and the noise reduced signal $\hat{s}_g(n)$ on the basis of the speech input-signal-to-noise ratio (INR) or the signal-to-noise ratio (SNR) to obtain an enhanced speech output signal $\hat{s}(n)$.

2. The method according to claim 1, further comprising

weightening the reconstructed speech signal $\hat{s}_r(n)$ based on the speech input-signal-to-noise ratio (INR) or the signal-to-noise ratio (SNR) to obtain a weighted reconstructed speech signal;

weightening the noise reduced signal $\hat{s}_g(n)$ based on the speech input-signal-to-noise ratio (INR) or the signal-to-noise ratio (SNR) to obtain a weighted noise reduced signal; and wherein

the step of combining the reconstructed speech signal $\hat{s}_r(n)$ and the noise reduced signal $\hat{s}_g(n)$ consists of adding the weighted reconstructed speech signal and the weighted noise reduced signal to obtain the enhanced speech output signal $\hat{s}(n)$.

3. The method according to claim 1 or 2, wherein the step of estimating the speech input-signal-to-noise ratio (INR) or the signal-to-noise ratio (SNR) comprises the steps of

estimating the short-time power density spectrum of noise included in the speech input signal y(n); and

determining the short-time spectrogram of the speech input signal y(n).

4. The method according to claim 3, wherein estimating the short-time power density spectrum of noise for a discrete time index n from a short-time power density spectrum of noise for a discrete time index n -1 comprises the steps of

smoothing the short-time power density spectrum of the speech input signal y(n) in time to obtain a first smoothed short-time power density spectrum;

smoothing the first smoothed short-time power density spectrum in positive frequency direction to obtain a second smoothed short-time power density spectrum;

smoothing the second smoothed short-time power density spectrum in negative frequency direction to obtain a third smoothed short-time power density spectrum; and

determining the minimum of the third smoothed short-time power density spectrum for the discrete time index n and the estimated short-time power density spectrum of noise for a discrete time index n - 1.

5. The method according to one of the preceding claims, wherein the excitation signal is generated by means of an excitation code book.

6. The method according to one of the preceding claims, wherein the reconstructed speech signal $\hat{s}_r(n)$ is generated on the basis of an estimated spectral envelope that is generated from the extracted spectral envelope and by means of a spectral envelope code book.

7. The method according to claim 6, wherein a prototype spectral envelope of the spectral envelope code book is determined that best matches the extracted spectral envelope for portions of the speech input signal that exhibit an input-signal-to-noise ratio above a predetermined threshold and wherein the estimated spectral envelope substantially consists of the determined best matching prototype spectral envelope for the portions of the speech input signal that exhibit an input-signal-to-noise ratio above the predetermined threshold and of the extracted spectral envelope for the other signal portions.

8. The method according to claim 7, wherein the estimated spectral envelope is calculated in the sub-band regime from the weighted sum of the extracted spectral envelope smoothed in frequency $E_S(e^{j\Omega_\mu}, n)$ and the determined best matching prototype spectral envelope $E_{CB}(e^{j\Omega_\mu}, n)$

$$M(\Omega_\mu, n)\ E_S(e^{j\Omega_\mu}, n) + (1 - M(\Omega_\mu, n))\ E_{CB}(e^{j\Omega_\mu}, n)$$

where the mask function $M(\Omega_\mu, n)$ depends on the input-signal-to-noise ratio.

9. The method according to one of the claims 6 to 8, wherein the excitation signal is generated from filtered excitation sub-band signals $A(e^{j\Omega_\mu}, n)$, and wherein the filtered excitation sub-band signals $A(e^{j\Omega_\mu}, n)$ are obtained by means of a spread noise reduction filtering means.

**10.** The method according to one of the preceding claims, wherein the generation of the enhanced speech output signal $\hat{s}(n)$ comprises the generation of sub-band signals $\hat{S}_r(e^{j\Omega_\mu}, n)$ of the reconstructed speech signal $\hat{s}_r(n)$ and sub-band signals $\hat{S}_g(e^{j\Omega_\mu}, n)$ of the noise reduced signal $\hat{s}_g(n)$ and the phases of the sub-band signals $\hat{S}_r(e^{j\Omega_\mu}, n)$ of the reconstructed speech signal $\hat{s}_r(n)$ are adapted to the phases of the sub-band signals $\hat{S}_g(e^{j\Omega_\mu}, n)$ of the noise reduced signal $\hat{s}_g(n)$ in dependence on the input-signal-to-noise ratio (INR($\Omega_\mu$,n)), in particular, by

$$\hat{S}_{r,mod}(e^{j\Omega_\mu},n) = \begin{cases} \left|\dfrac{\hat{S}_r(e^{j\Omega_\mu},n)}{\hat{S}_g(e^{j\Omega_\mu},n)}\right| \hat{S}_g(e^{j\Omega_\mu},n), & \text{if INR}(\Omega_\mu,n) > \text{some threshold} \\ \\ \hat{S}_r(e^{j\Omega_\mu},n), & \text{else}. \end{cases}$$

**11.** Computer program product, comprising one or more computer readable media having computer-executable instructions for performing the steps of the method according to one of the Claims 1 to 10.

**12.** Signal processing means for processing a speech input signal y(n), comprising
a noise reduction filtering means (10) configured to receive the speech input signal y(n) and to output a noise reduced signal $\hat{s}_g(n)$;
a signal reconstruction means (11) configured to receive the speech input signal y(n) and to extract the spectral envelope from the speech input signal y(n) and to generate an excitation signal on the basis of the speech input signal y(n) and to generate and output a reconstructed speech signal $\hat{s}_r(n)$ based on the extracted spectral envelope and the excitation signal;
a signal combination means (13) configured to receive the noise reduced signal $\hat{s}_g(n)$ and the reconstructed speech signal $\hat{s}_r(n)$ and to output an enhanced speech output signal $\hat{s}(n)$ as a combination of the noise reduced signal $\hat{s}_g(n)$ and the reconstructed speech signal $\hat{s}_r(n)$; and
a control means (12) configured to receive the speech input signal y(n) and to control the signal reconstruction means (11) and the signal combination means (13) based on the input-signal-to-noise ratio or the signal-to-noise ratio of the speech input signal y(n) determined by the noise reduction filtering means (10) or the control means (12).

**13.** The signal processing means according to claim 12, further comprising at least one analysis filter bank (21) configured to transform the speech input signal y(n) in speech input sub-band signals $Y(e^{j\Omega_\mu},n)$ and at least one synthesis filter bank (22) configured to synthesize sub-band signals output by the signal combination means (13) or by the noise reduction filtering means (10) and the signal reconstruction means (11).

**14.** The signal processing means according to claim 12 or 13, wherein the signal reconstruction means (11) comprises
an excitation code book database (26);
a spectral envelope code book database (24);
an excitation estimator (25) configured to generate the excitation signal by means of the excitation code book database (26);
a spectral envelope estimator (23) configured to generate an estimated spectral envelope by means of the spectral envelope code book database (24); and
wherein the signal reconstruction means (11) is configured to generate and output the reconstructed speech signal $\hat{s}_r(n)$ based on the estimated spectral envelope and the excitation signal.

**15.** The signal processing means according to one of the claims 12 to 14, wherein the control means (12) is configured to determine the input-signal-to-noise ratio or the signal-to-noise ratio of the speech input signal y(n) and to deactivate the signal reconstruction means (11), if it is determined that the input-signal-to-noise ratio or the signal-to-noise ratio of the speech input signal y(n) exceeds a predetermined threshold for the entire speech input signal y(n).

**16.** Hands-free telephony system, comprising the signal processing means according to one of the claims 12 - 15.

**17.** Speech recognition means comprising the signal processing means according to one of the claims 12 - 15.

**18.** Speech dialog system or voice control system comprising the speech recognition means according to claim 17 or the signal processing means according to one of the claims 12 - 15.

**Patentansprüche**

1. Verfahren zum Verarbeiten eines Spracheingangssignals y(n), das umfasst
   Schätzen eines Eingangs-Signal-zu-Rausch-Verhältnisses (INR) oder eines Signal-zu-Rausch-Verhältnisses (SNR) des Spracheingangssignals y(n);
   Erzeugen eines Anregungssignals auf der Grundlage des Spracheingangssignals y(n);
   Extrahieren einer spektralen Einhüllenden des Spracheingangssignals y(n);
   Erzeugen eines rekonstruierten Sprachsignals $\hat{s}_r(n)$ auf der Grundlage des Anregungssignals und der extrahierten spektralen Einhüllenden;
   Filtern des Spracheingangssignals y(n) mit einer Geräuschverringerungsfiltereinrichtung (10), um ein geräuschverringertes Sprachsignal $\hat{s}_g(n)$ zu erhalten; und
   Kombinieren des rekonstruierten Sprachsignals $\hat{s}_r(n)$ und des geräuschverringerten Sprachsignals $\hat{s}_g(n)$ auf der Grundlage des Spracheingangssignal-zu-Rausch-Verhältnisses (INR) oder des Signal-zu-Rausch-Verhältnisses (SNR), um ein verbessertes Sprachausgangssignal $\hat{s}(n)$ zu erhalten.

2. Das Verfahren gemäß Anspruch 1, das weiterhin umfasst
   Gewichten des rekonstruierten Sprachsignals $\hat{s}_r(n)$ auf der Grundlage des Spracheingangssignal-zu-Rausch-Verhältnisses (INR) oder des Signal-zu-Rausch-Verhältnisses (SNR), um ein gewichtetes rekonstruiertes Sprachsignal zu erhalten;
   Gewichten des geräuschverringerten Sprachsignals $\hat{s}_g(n)$ auf der Grundlage des Spracheingangssignal-zu-Rausch-Verhältnisses (INR) oder des Signal-zu-Rausch-Verhältnisses (SNR), um ein gewichtetes geräuschverringertes Signal zu erhalten; und in dem
   der Schritt des Kombinierens des rekonstruierten Sprachsignals $\hat{s}_r(n)$ und des geräuschverringerten Sprachsignals $\hat{s}_g(n)$, um das verbesserte Sprachausgangssignal $\hat{s}(n)$ zu erhalten, aus dem Addieren des gewichteten rekonstruierten Sprachsignals und des gewichteten geräuschverringerten Signals besteht.

3. Das Verfahren gemäß Anspruch 1 oder 2, in dem der Schritt des Schätzens des Spracheingangsignal-zu-Rausch-Verhältnisses (INR) oder des Signal-zu-Rausch-Verhältnisses (SNR), um das verbesserte Sprachausgangssignal $\hat{s}(n)$ zu erhalten, die Schritte umfasst
   Schätzen des Kurzzeit-Leistungsdichte-Spektrums von Rauschen, das in dem Spracheingangssignal y(n) enthalten ist; und
   Bestimmen des Kurzzeit-Spektrogramms des Spracheingangssignals y(n).

4. Das Verfahren gemäß Anspruch 3, in dem das Schätzen des Kurzzeit-Leistungsdichte-Spektrums von Rauschen für einen diskreten Zeitindex n aus einem Kurzzeit-Leistungsdichte-Spektrum von Rauschen für einen diskreten Zeitindex n-1 die Schritte umfasst
   Glätten des Kurzzeit-Leistungsdichte-Spektrums des Spracheingangssignals y(n) in der Zeit, um ein erstes geglättetes Kurzzeit-Leistungsdichte-Spektrum zu erhalten;
   Glätten des ersten geglätteten Kurzzeit-Leistungsdichte-Spektrums in positiver Frequenzrichtung, um ein zweites geglättetes Kurzzeit-Leistungsdichte-Spektrum zu erhalten;
   Glätten des zweiten geglätteten Kurzzeit-Leistungsdichte-Spektrums in negativer Frequenzrichtung, um ein drittes geglättetes Kurzzeit-Leistungsdichte-Spektrum zu erhalten; und
   Bestimmen des Minimums des dritten geglätteten Kurzzeit-Leistungsdichte-Spektrums für den diskreten Zeitindex n und des geschätzten Kurzzeit-Leistungsdichte-Spektrums von Rauschen für einen diskreten Zeitindex n - 1.

5. Das Verfahren gemäß einem der vorhergehenden Ansprüche, in dem das Anregungssignal mithilfe eines Anregungs-Codebuchs erzeugt wird.

6. Das Verfahren gemäß einem der vorhergehenden Ansprüche, in dem das rekonstruierte Sprachsignal $\hat{s}_r(n)$ auf der Grundlage einer geschätzten spektralen Einhüllenden erzeugt wird, die aus der extrahierten spektralen Einhüllenden und mithilfe eines Spektrale-Einhüllende-Codebuchs erzeugt wird.

7. Das Verfahren gemäß Anspruch 6, in dem eine Prototyp-Spektrale-Einhüllende des Spektrale-Einhüllende-Codebuchs bestimmt wird, die für Teile des Spracheingangssignals, die ein Eingangs-Signal-zu-Rausch-Verhältnis oberhalb einer vorbestimmten Schwelle aufweisen, am besten zu der extrahierten spektralen Einhüllenden passen, und in dem die geschätzte spektrale Einhüllende im wesentlichen für die Teile des Spracheingangssignals, die ein Eingangs-Signal-zu-Rausch-Verhältnis oberhalb einer vorbestimmten Schwelle aufweisen, aus der bestimmten am besten passenden Prototyp-Spektrale-Einhüllenden und für die anderen Signalteile aus der extrahierten spektralen Einhüllenden besteht.

8. Das Verfahren gemäß Anspruch 7, in dem die geschätzte spektrale Einhüllende in dem Teilbandbereich aus der gewichteten Summe der in der Frequenz geglätteten extrahierten spektralen Einhüllenden $E_S(e^{j\Omega_\mu}, n)$ und der bestimmten am besten passenden Prototyp-Spektrale-Einhüllenden $E_{CB}(e^{j\Omega_\mu}, n)$

$$M(\Omega_\mu, n) \ E_S(e^{j\Omega_\mu}, n) \ + (1- M(\Omega_\mu, n)) \ E_{CB}(e^{j\Omega_\mu}, n)$$

berechnet wird, wobei die Maskenfunktion $M(\Omega_\mu, n)$ von dem Eingangs-Signal-zu-Rausch-Verhältnis abhängt.

9. Das Verfahren gemäß einem der Ansprüche 6 bis 8, in dem das Anregungssignal aus den gefilterten Teilband-Anregungssignalen $A(e^{j\Omega_\mu}, n)$ erzeugt wird, und in dem die gefilterten Teilband-Anregungssignale $A(e^{j\Omega_\mu}, n)$ mithilfe einer gespreizten Geräuschverringerungsfiltereinrichtung erhalten werden.

10. Das Verfahren gemäß einem der vorhergehenden Ansprüche, in dem die Erzeugung des verbesserten Sprachausgangssignals $\hat{s}(n)$ die Erzeugung von Teilbandsignalen $\hat{S}_r(e^{j\Omega_\mu}, n)$ des rekonstruierten Sprachsignals $\hat{s}_r(n)$ und von Teilbandsignalen $\hat{S}_g(e^{j\Omega_\mu}, n)$ des geräuschreduzierten Signals $\hat{s}_g(n)$ umfasst, und die Phasen der Teilbandsignale $\hat{S}_r(e^{j\Omega_\mu}, n)$ des rekonstruierten Sprachsignals an die Phasen der Teilbandsignale $\hat{S}_g(e^{j\Omega_\mu}, n)$ des geräuschreduzierten Signals $\hat{s}_g(n)$ in Abhängigkeit von dem Eingangs-Signal-zu-Rausch-Verhältnis $(INR(\Omega_\mu, n))$ angepasst werden, insbesondere durch

$$\hat{S}_{r,mod}(e^{j\Omega_\mu}, n) = \begin{cases} \left|\dfrac{\hat{S}_r(e^{j\Omega_\mu}, n)}{\hat{S}_g(e^{j\Omega_\mu}, n)}\right| \hat{S}_g(e^{j\Omega_\mu}, n), & \text{wenn } INR(\Omega_\mu, n) > \text{bestimmte Schwelle} \\[4mm] \hat{S}_r(e^{j\Omega_\mu}, n), & \text{sonst}. \end{cases}$$

11. Computerprogrammprodukt, das ein oder mehrere computerlesbare Medien umfasst, die computerausführbare Anweisungen zum Ausführen der Schritte des Verfahrens gemäß einem der Ansprüche 1 bis 10 aufweisen.

12. Signalverarbeitungsvorrichtung zum Verarbeiten eines Spracheingangssignals y(n), die umfasst
   eine Geräuschverringerungsfiltereinrichtung (10), die dazu ausgebildet ist, das Spracheingangssignal y(n) zu empfangen und ein geräuschverringertes Sprachsignal $\hat{s}_g(n)$ auszugeben;
   eine Signalrekonstruktionseinrichtung (11), die dazu ausgebildet ist, das Spracheingangssignal y(n) zu empfangen und die spektrale Einhüllende aus dem Spracheingangssignal y(n) zu extrahieren und ein Anregungssignal auf der Grundlage des Spracheingangssignals y(n) zu erzeugen und ein rekonstruiertes Sprachsignals $\hat{s}_r(n)$ auf der Grundlage der extrahierten spektralen Einhüllenden und des Anregungssignals zu erzeugen und auszugeben;
   eine Signalkombinationseinrichtung (13), die dazu ausgebildet ist, das geräuschverringerte Sprachsignal $\hat{s}_g(n)$ und das rekonstruierte Sprachsignal $\hat{s}_r(n)$ zu empfangen und ein verbessertes Sprachausgangssignal $\hat{s}(n)$ als eine Kombination des geräuschverringerten Sprachsignals $\hat{s}_g(n)$ und des rekonstruierten Sprachsignals $\hat{s}_r(n)$ auszugeben; und
   eine Steuereinrichtung (12), die dazu ausgebildet ist, das Spracheingangssignal y(n) zu empfangen und die Signalrekonstruktionseinrichtung (11) und die Signalkombinationseinrichtung (13) auf der Grundlage des Eingangs-Signal-zu-Rausch-Verhältnisses oder des Signal-zu-Rausch-Verhältnisses (SNR) des Spracheingangssignals y(n), das von der Geräuschverringerungsfiltereinrichtung (10) oder der Steuereinrichtung (12) bestimmt wird, zu steuern.

13. Die Signalverarbeitungsvorrichtung gemäß Anspruch 12, die weiterhin zumindest eine Analysefilterbank (21), die dazu ausgebildet ist, das Spracheingangssignal y(n) in Spracheingangs-Teilbandsignale $Y(e^{j\Omega_\mu},n)$ zu wandeln, und zumindest eine Synthesefilterbank (22) umfasst, die dazu ausgebildet ist, Teilbandsignal zu synthetisieren, die von der Signalkombinationseinrichtung (13) oder von der Geräuschverringerungsfiltereinrichtung (10) und der Signalrekonstruktionseinrichtung (11) ausgegeben werden.

14. Die Signalverarbeitungsvorrichtung gemäß Anspruch 12 oder 13, in der die Signalrekonstruktionseinrichtung (11) umfasst

eine Anregungs-Codebuch-Datenbank (26);

eine Spektrale-Einhüllende-Codebuch-Datenbank (24);

einen Anregungsschätzer (25), der dazu ausgebildet ist, das Anregungssignal mithilfe der Anregungs-Codebuch-Datenbank (26) zu erzeugen;

einen Spektrale-Einhüllende-Schätzer (23), der dazu ausgebildet ist, eine geschätzte spektrale Einhüllende mithilfe der Spektrale-Einhüllende-Codebuch-Datenbank (24) zu erzeugen; und

in der die Signalrekonstruktionseinrichtung (11) dazu ausgebildet ist, das rekonstruierte Sprachsignal $\hat{s}_r(n)$ auf der Grundlage der geschätzten spektralen Einhüllenden und des Anregungssignals zu erzeugen.

15. Die Signalverarbeitungsvorrichtung gemäß einem der Ansprüche 12 bis 14, in der die Steuereinrichtung (12) dazu ausgebildet ist, das Eingangs-Signal-zu-Rausch-Verhältnis oder das Signal-zu-Rausch-Verhältnis des Spracheingangssignals y(n) zu bestimmen und die Signalrekonstruktionseinrichtung (11) zu deaktivieren, wenn festgestellt wird, dass das Eingangs-Signal-zu-Rausch-Verhältnis oder das Signal-zu-Rausch-Verhältnis des Spracheingangssignals y(n) eine vorbestimmte Schwelle für das gesamte Spracheingangssignal y(n) überschreitet.

16. Freihand-Telefonsystem, das die Signalverarbeitungsvorrichtung gemäß einem der Ansprüche 12 bis 15 umfasst.

17. Spracherkennungseinrichtung, die die Signalverarbeitungsvorrichtung gemäß einem der Ansprüche 12 bis 15 umfasst.

18. Sprachdialogsystem oder Sprachsteuerungssystem, das die Spracherkennungseinrichtung gemäß Anspruch 17 oder die Signalverarbeitungsvorrichtung gemäß einem der Ansprüche 12 bis 15 umfasst.

**Revendications**

1. Procédé pour traiter un signal d'entrée de parole y(n), comprenant

l'estimation d'un rapport signal / bruit à l'entrée (INR) ou d'un rapport signal / bruit (SNR) du signal d'entrée de parole y(n) ;

la génération d'un signal d'excitation basé sur le signal d'entrée de parole y(n) ;

l'extraction d'une enveloppe spectrale du signal d'entrée de parole y(n) ;

la génération d'un signal de parole reconstitué $\hat{s}_r(n)$ sur la base du signal d'excitation et de l'enveloppe spectrale extraite ;

le filtrage du signal d'entrée de parole y(n) par un moyen de filtrage à réduction de bruit (10) afin d'obtenir un signal à bruit réduit $\hat{s}_g(n)$ ; et

la combinaison du signal de parole reconstitué $\hat{s}_r(n)$ et du signal à bruit réduit $\hat{s}_g(n)$ sur la base du rapport signal / bruit à l'entrée (INR) ou du rapport signal / bruit (SNR) de la parole afin d'obtenir un signal de sortie de parole amélioré $\hat{s}(n)$.

2. Procédé selon la revendication 1, comprenant en outre

la pondération du signal de parole reconstitué $\hat{s}_r(n)$ sur la base du rapport signal / bruit à l'entrée (INR) ou du rapport signal / bruit (SNR) de la parole afin d'obtenir un signal de parole reconstitué pondéré ;

la pondération du signal à bruit réduit $\hat{s}_g(n)$ sur la base du rapport signal / bruit à l'entrée (INR) ou du rapport signal / bruit (SNR) de la parole afin d'obtenir un signal à bruit réduit pondéré ; et dans lequel

l'étape de combinaison du signal de parole reconstitué $\hat{s}_r(n)$ et du signal à bruit réduit $\hat{s}_g(n)$ consiste en l'ajout du signal de parole reconstitué pondéré et du signal à bruit réduit pondéré afin d'obtenir le signal de sortie de parole amélioré $\hat{s}(n)$.

3. Procédé selon la revendication 1 ou 2, dans lequel l'étape d'estimation du rapport signal / bruit à l'entrée (INR) ou du rapport signal / bruit (SNR) de la parole comprend les étapes consistant à

estimer le spectre de densité de puissance de courte durée de bruit inclus dans le signal d'entrée de parole y(n) ; et

déterminer le spectrogramme de courte durée du signal d'entrée de parole y(n).

4. Procédé selon la revendication 3, dans lequel l'estimation du spectre de densité de puissance de courte durée de bruit pour un indice temporel discret n à partir d'un spectre de densité de puissance de courte durée de bruit pour un indice temporel discret n-1 comprend les étapes consistant à

lisser le spectre de densité de puissance de courte durée du signal d'entrée de parole y(n) dans le temps afin d'obtenir un premier spectre de densité de puissance de courte durée lissé ;

lisser le premier spectre de densité de puissance de courte durée lissé dans une direction de fréquence positive afin d'obtenir un deuxième spectre de densité de puissance de courte durée lissé ;

lisser le deuxième spectre de densité de puissance de courte durée lissé dans une direction de fréquence négative afin d'obtenir un troisième spectre de densité de puissance de courte durée lissé ; et

déterminer le minimum du troisième spectre de densité de puissance de courte durée lissé pour l'indice temporel discret n et le spectre de densité de puissance de courte durée de bruit estimé pour un indice temporel discret n-1.

5. Procédé selon l'une des revendications précédentes, dans lequel le signal d'excitation est généré au moyen d'un livre de codes d'excitation.

6. Procédé selon l'une des revendications précédentes, dans lequel le signal de parole reconstitué $\hat{s}_r(n)$ est généré sur la base d'une enveloppe spectrale estimée qui est générée à partir de l'enveloppe spectrale extraite et au moyen d'un livre de codes d'enveloppe spectrale.

7. Procédé selon la revendication 6, dans lequel une enveloppe spectrale prototype du livre de codes d'enveloppe spectrale est déterminée qui concorde le mieux avec l'enveloppe spectrale extraite pour des parties du signal d'entrée de parole qui présentent un rapport signal / bruit à l'entrée supérieur à un seuil prédéterminé et dans lequel l'enveloppe spectrale estimée consiste sensiblement en l'enveloppe spectrale prototype déterminée concordant le mieux pour les parties du signal d'entrée de parole qui présentent un rapport signal / bruit à l'entrée supérieur au seuil prédéterminé et en l'enveloppe spectrale extraite pour les autres parties du signal.

8. Procédé selon la revendication 7, dans lequel l'enveloppe spectrale estimée est calculée dans le régime de sous-bande à partir de la somme pondérée de l'enveloppe spectrale extraite lissée dans la fréquence $E_S(e^{j\Omega\mu}, n)$ et de l'enveloppe spectrale prototype déterminée concordant le mieux $E_{CB}(e^{j\Omega\mu}, n)$

$$M(\Omega_\mu, n) \, E_S(e^{j\Omega\mu}, n) + (1 - M(\Omega_\mu, n)) \, E_{CB}(e^{j\Omega\mu}, n)$$

où la fonction de masque $M(\Omega_\mu, n)$ dépend du rapport signal / bruit à l'entrée.

9. Procédé selon l'une des revendications 6 à 8, dans lequel le signal d'excitation est généré à partir de signaux de sous-bande d'excitation filtrés $A(e^{j\Omega\mu}, n)$, et dans lequel les signaux de sous-bande d'excitation filtrés $A(e^{j\Omega\mu}, n)$ sont obtenus par le biais d'un moyen de filtrage à réduction de bruit étalé.

10. Procédé selon l'une des revendications précédentes, dans lequel la génération du signal de sortie de parole amélioré $\hat{s}(n)$ comprend la génération de signaux de sous-bande $\hat{S}_r(e^{j\Omega\mu}, n)$ du signal de parole reconstitué $\hat{s}_r(n)$ et de signaux de sous-bande $\hat{S}_g(e^{j\Omega\mu}, n)$ du signal à bruit réduit $\hat{s}_g(n)$ et les phases des signaux de sous-bande $\hat{S}_r(e^{j\Omega\mu}, n)$ du signal de parole reconstitué $\hat{s}_r(n)$ sont adaptées aux phases des signaux de sous-bande $\hat{S}_g(e^{j\Omega\mu}, n)$ du signal à bruit réduit $\hat{s}_g(n)$ en fonction du rapport signal / bruit à l'entrée $(INR(\Omega_\mu, n))$, en particulier, par

$$\hat{S}_{r,mod}(e^{j\Omega_\mu},n) = \begin{cases} \left| \dfrac{\hat{S}_r(e^{j\Omega_\mu},n)}{\hat{S}_g(e^{j\Omega_\mu},n)} \right| \hat{S}_g(e^{j\Omega_\mu},n), \text{ si } INR(\Omega_\mu,n) > \text{ un seuil} \\ \\ \hat{S}_r(e^{j\Omega_\mu},n), \text{ sinon.} \end{cases}$$

11. Produit de programme informatique, comprenant un ou plusieurs supports lisibles par ordinateur ayant des instructions exécutables par ordinateur pour effectuer les étapes du procédé selon l'une des revendications 1 à 10.

12. Moyen de traitement de signal pour traiter un signal d'entrée de parole y(n), comprenant

un moyen de filtrage à réduction de bruit (10) configuré pour recevoir le signal d'entrée de parole y(n) et pour sortir un signal à bruit réduit $\hat{s}_g(n)$ ;

un moyen de reconstitution de signal (11) configuré pour recevoir le signal d'entrée de parole y(n) et pour extraire l'enveloppe spectrale du signal d'entrée de parole y(n) et pour générer un signal d'excitation sur la base du signal d'entrée de parole y(n) et pour générer et sortir un signal de parole reconstitué $\hat{s}_r(n)$ basé sur l'enveloppe spectrale extraite et le signal d'excitation ;

un moyen de combinaison de signal (13) configuré pour recevoir le signal à bruit réduit $\hat{s}_g(n)$ et le signal de parole reconstitué $\hat{s}_r(n)$ et pour sortir un signal de sortie de parole amélioré $\hat{s}(n)$ comme une combinaison du signal à bruit réduit $\hat{s}_g(n)$ et du signal de parole reconstitué $\hat{s}_r(n)$ ; et

un moyen de commande (12) configuré pour recevoir le signal d'entrée de parole y(n) et pour commander le moyen de reconstitution de signal (11) et le moyen de combinaison de signal (13) sur la base du rapport signal / bruit à l'entrée ou du rapport signal / bruit du signal d'entrée de parole y(n) déterminé par le moyen de filtrage à réduction de bruit (10) ou le moyen de commande (12).

13. Moyen de traitement de signal selon la revendication 12, comprenant en outre au moins un banc de filtres d'analyse (21) configuré pour transformer le signal d'entrée de parole y(n) en signaux de sous-bande d'entrée de parole Y($e^{j\Omega\mu}$, n) et au moins un banc de filtres de synthèse (22) configuré pour synthétiser des signaux de sous-bande sortis par le moyen de combinaison de signal (13) ou par le moyen de filtrage à réduction de bruit (10) et le moyen de reconstitution de signal (11).

14. Moyen de traitement de signal selon la revendication 12 ou 13, dans lequel le moyen de reconstitution de signal (11) comprend

une base de données de livre de codes d'excitation (26) ;

une base de données de livre de codes d'enveloppe spectrale (24) ;

un estimateur d'excitation (25) configuré pour générer le signal d'excitation au moyen de la base de données de livre de codes d'excitation (26) ;

un estimateur d'enveloppe spectrale (23) configuré pour générer une enveloppe spectrale estimée au moyen de la base de données de livre de codes d'enveloppe spectrale (24) ; et

dans lequel le moyen de reconstitution de signal (11) est configuré pour générer et sortir le signal de parole reconstitué $\hat{s}_r(n)$ basé sur l'enveloppe spectrale estimée et le signal excitation.

15. Moyen de traitement de signal selon l'une des revendications 12 à 14, dans lequel le moyen de commande (12) est configuré pour déterminer le rapport signal / bruit à l'entrée ou le rapport signal / bruit du signal d'entrée de parole y(n) et pour désactiver le moyen de reconstitution de signal (11), s'il est déterminé que le rapport signal / bruit à l'entrée ou le rapport signal / bruit du signal d'entrée de parole y(n) dépasse un seuil prédéterminé pour le signal d'entrée de parole entier y(n).

16. Système de téléphonie mains libres, comprenant le moyen de traitement de signal selon l'une des revendications 12 à 15.

17. Moyen de reconnaissance de la parole comprenant le moyen de traitement de signal selon l'une des revendications 12 à 15.

18. Système de dialogue vocal ou système de commande vocale comprenant le moyen de reconnaissance de la parole selon la revendication 17 ou le moyen de traitement de signal selon l'une des revendications 12 à 15.

input speech signal — 1

2 — detect portion of
input speech signal
with low INR

estimate spectral
3 — envelope

estimate
4 — excitation signal

reconstruct
5 — speech signal

reduce noise in
input speech signal — 6

combine reconstructed
and noise reduced
signals — 7

FIG. 1

FIG. 2

FIG. 3

FIG. 4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **L. ARSLAN et al.** New Methods for Adaptive Noise Suppression. *ICASSP,* 1995, 812-815
- **E. HÄNSLER ; G. SCHMIDT.** Acoustic Echo and Noise Control. Wiley, 2004
- **W. HESS.** Pitch Determination of Speech Signals. Springer, 1983